# EUROPEAN PATENT APPLICATION

(11) **EP 4 825 730 A1**
(43) Date of publication of application: **21.10.2026**
(21) Application number: 26158046.8
(22) Date of filing: 12.02.2026
(51) Int. Cl.: B64D 11/00, B64D 11/04, E05B 41/00

(54) **LOCKING ASSEMBLY TO SELECTIVELY LOCK A SERVICE CART ON AN AIRCRAFT**

(30) Priority: 14.04.2025 US 202519177886
(71) Applicant: The Boeing Company, Arlington, VA 22202 (US)
(72) Inventor: SCHERREI, Josiah R., ARLINGTON, 22202 (US); SINGLETON, Christopher B., ARLINGTON, 22202 (US)
(74) Representative: Plasseraud IP

(57) **Abstract**

A locking assembly to position one or more arms that are configured to be mounted to a work station to selectively lock a service cart at the work station in a cabin area of an aircraft. The locking assembly has an actuator with a body configured to connect to and move relative to the work station. A visual indicator is mounted to the work station with the visual indicator having a first visual appearance when the actuator is at a first position and a second visual appearance when the actuator is at the second position. A linkage has an elongated shape with a first end section connected to the one or more arms and a second end section connected to the actuator with the linkage configured to transfer force from the rotating actuator to the one or more arms and sized to space the actuator away from the one or more arms.

## Description

### FIELD

The present disclosure relates generally to the field of aircraft and, more specifically, to a locking assembly configured to be mounted within a cabin area of an aircraft to selectively lock a service cart in a storage position.

### BACKGROUND

Service carts are mobile carts used to transport and store items such as food, drinks, and other relatively small objects on an aircraft. The service carts usually include a body with multiple shelves each configured to hold the items. The body is sized to fit within the aisles of the cabin area. Wheels are mounted to the bottom of the body to enable the service carts to be moved around the cabin area to accommodate the passengers during flight. The service carts are often stored in a galley section of the cabin area when not in use. The service carts are secured in the stored position to prevent inadvertent movement that could occur such as during turbulence, take-off, and landing.

The current method of storing service carts is to position the service carts underneath a counter of a work station in the galley section. The work station includes latches (commonly referred to as quarter turns) that lock the service carts in the stored position. Because of the number and size of the service carts and the relatively small galley section, the service carts are often arranged in an overlapping arrangement due to the number of service carts relative to the size of the galley. The overlapping arrangement results in one or more service carts positioned perpendicularly in front of other service carts when they are in the storage position.

An issue with this overlapping arrangement is it is often difficult for flight personnel to visually identify whether the recessed service carts are properly secured in the stored position. The position of the latches for the forward service carts can be visually seen to determine their positioning. The recessed service carts are blocked by the front service carts making it difficult or not possible to visually determine their locked status. Further, it is often difficult for the flight personnel to secure the recessed service carts as these carts are locked prior to positioning the front carts in their storage position. Further, once the carts are in the overlapping arrangement, it is difficult for the flight personnel to confirm that the back carts are properly locked.

### SUMMARY

One aspect is directed to a locking assembly to position one or more arms that are configured to be mounted to a work station to selectively lock a service cart at the work station in a cabin area of an aircraft. The locking assembly comprises an actuator comprising a body configured to connect to and move relative to the work station. A visual indicator is mounted to the work station with the visual indicator comprising a first visual appearance when the actuator is at a first position and a second visual appearance when the actuator is at the second position. A linkage comprising an elongated shape with a first end section connected to the one or more arms and a second end section connected to the actuator with the linkage configured to transfer force from the rotating actuator to the one or more arms and sized to space the actuator away from the one or more arms. The linkage may have a size and/or shape such that the actuator is spaced away from the one or more arms by a certain distance.

In another aspect, the actuator is spaced away from the visual indicator.

In another aspect, switches are associated with each of the one or more arms with each of the switches configured to close to cause illumination of the visual indicator when a corresponding one of the arms is in an unlocked position.

In another aspect, the visual indicator is a tab that is configured to move between recessed and extended positions relative to the work station.

In another aspect, teeth are mounted on the actuator and the one or more arms, wherein the linkage is positioned on the teeth to prevent the linkage from slipping.

In another aspect, the actuator further comprises: a shaft mounted to the work station and with a length to extend outward from the work station; teeth that extend radially outward from the shaft to engage with the linkage; and a handle connected to the shaft.

In another aspect, the actuator and the visual indicator comprise a common body.

In another aspect, the linkage comprises a flexible elongated member that forms a continuous loop with the loop extending around the actuator and the one or more arms.

In another aspect, the linkage comprises a rigid member with a first end connected to the actuator and a second end connected to the one or more arms.

In another aspect, the linkage is configured to cause the one or more arms to rotate in a common direction as the actuator.

One aspect is directed to a locking assembly to selectively position one or more arms between a locked position and an unlocked position. The locking assembly is configured to be mounted to a work station in a cabin area of an aircraft to selectively lock a service cart. The locking assembly comprises an actuator comprising a body with a handle and configured to be movable to different positions relative to the work station. A visual indicator is configured to selectively have a first visual appearance and a different second visual appearance depending upon the position of the one or more arms. A linkage comprises an elongated shape that extends between and is connected to the actuator and the one or more arms. The linkage is configured to transfer force from the actuator to the one or more arms to move the one or more arms between a locked position and an unlocked position. The locked position locates the one or more arms outward from the work station to lock the service cart. The unlocked position locates the one or more arms away from the service cart to unlock the service cart.

In another aspect, teeth are positioned on the actuator with the linkage located on the actuator at the teeth to prevent slippage of the linkage.

In another aspect, the linkage comprises a loop that extends around shafts on the one or more arms and the actuator.

In another aspect, the visual indicator and the linkage share a common body.

One aspect is directed to a method of mounting a locking assembly to a work station within a cabin area of an aircraft. The method comprises: mounting an actuator to the work station with the actuator configured to move between different positions relative to the work station; connecting a linkage to the actuator and to one or more arms that are mounted on the work station with the linkage configured to transfer force from the actuator to the one or more arms. The linkage is configured to position the one or more arms in a locked position when the actuator is in a first position with the one or more arms extending in front of a service cart that is positioned at the work station to lock the position of the service cart. The linkage is configured to position the one or more arms in an unlocked position when the actuator is in a second position with the one or more arms positioned away from the service cart to enable the service cart to be moved away from the work station.

In another aspect, the method further comprises positioning a visual indicator in proximity to the one or more arms with the visual indicator having a first visual appearance when the one or more arms are in the locked position and a second visual appearance when the one or more arms are in the unlocked position.

In another aspect, connecting the linkage to the actuator and the one or more arms comprises wrapping a continuous loop of the linkage around each of the actuator and the one or more arms.

In another aspect, the method further comprises positioning the actuator on a front side of the work station and positioning the linkage behind the front side to prevent the linkage from inadvertent contact with flight personnel.

In another aspect, the method further comprises closing a switch on an electrical circuit when the one or more arms moves from the locked position to the unlocked position and illuminating a visual indicator.

In another aspect, the method further comprises moving the one or more arms to the locked position and extending the one or more arms below a counter of the work station.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is an isometric view of an aircraft.
Figure 2 is a schematic diagram of a cabin area within a fuselage of an aircraft.
Figure 3 is an isometric view of an attendant area with service carts positioned underneath a counter.
Figure 4 is a schematic diagram of a locking assembly.
Figure 5 illustrates a top schematic diagram of a locking assembly configured to selectively lock a service cart that is positioned in a corner of an attendant area.
Figure 6 is a side schematic view of the lock assembly and service carts of Figure 5.
Figure 7A is a side schematic diagram of a locking assembly in a locked position.
Figure 7B is a side schematic diagram of the locking assembly of Figure 7A in an unlocked position.
Figure 8A is a side schematic diagram of a locking assembly in a locked position.
Figure 8B is a side schematic diagram of the locking assembly of Figure 8A in an unlocked position.
Figure 9 is an isometric view of a locking assembly mounted at an attendant area
Figure 10A is a front schematic diagram of a locking assembly in a locked position.
Figure 10B is a rear schematic diagram of the locking assembly of Figure 10A in a locked position.
Figure 11A is a front schematic diagram of a locking assembly in an unlocked position.
Figure 11B is a rear schematic diagram of the locking assembly of Figure 11A in an unlocked position.
Figure 12 is a side schematic diagram of a locking assembly in a locked position.
Figure 13 is a schematic diagram of a circuit configured to illuminate a light when depending upon the position of the locking assembly.
Figure 14 is a flowchart diagram of a method of mounting a locking assembly to a work station within a cabin area of an aircraft.

### DETAILED DESCRIPTION

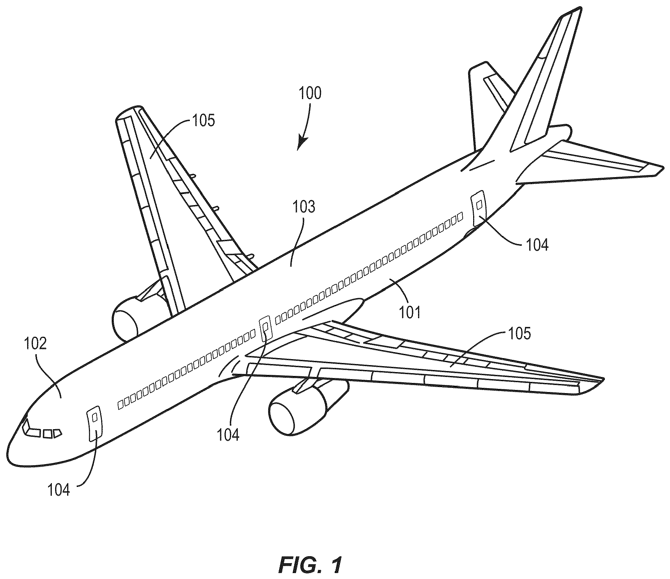

Figure 1 illustrates an aircraft 100 that generally includes a fuselage 101 and wings 105. A flight deck 102 is positioned at a front of the fuselage 101 and a cabin area 103 is positioned rearward. The cabin area 103 is equipped for accommodating passengers and/or cargo. The size of the flight deck 102 and the cabin area 103 can vary depending upon the aircraft 100. One or more exterior doors 104 provide for passengers and flight personnel to enter and exit the fuselage 101.

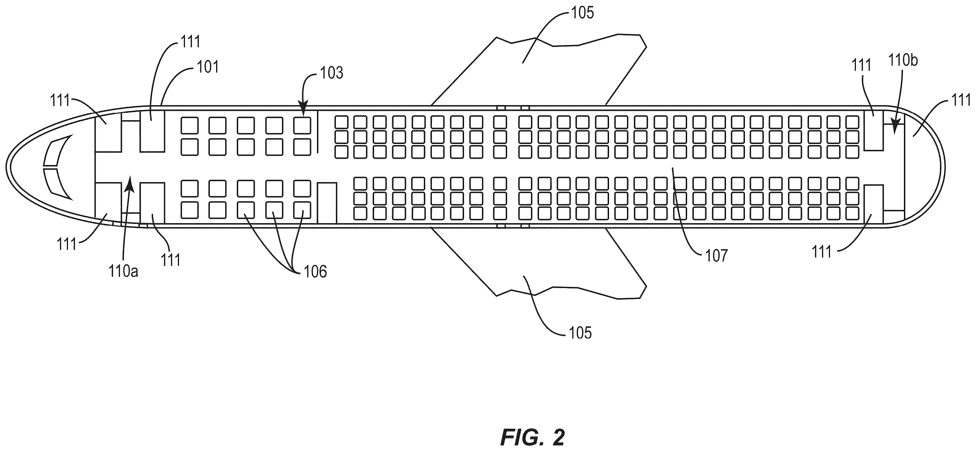

Figure 2 illustrates an interior of the fuselage 101. The cabin area 103 is positioned along the fuselage 101 rearward of the flight deck 102. The cabin area 103 includes seats 106 arranged in rows along one or more aisles 107. In some examples such as a commercial airline, the seats 106 extend throughout the cabin area 103. In other examples in which the aircraft 100 is used for cargo transport, a limited number of seats 106 are positioned in the cabin area 103.

The cabin area 103 also includes one or more attendant areas 110. The attendant areas 110 include one or more monuments 111 that are mounted to the structural members of the aircraft 100. The monuments 111 are functional units with examples including but not limited to galley work stations, lavatories, and stowage units. Figure 2 includes two attendant areas 110 with a first attendant area 110a positioned towards the front of the fuselage 101 and a second attendant area 110b positioned towards the rear of the fuselage 101.

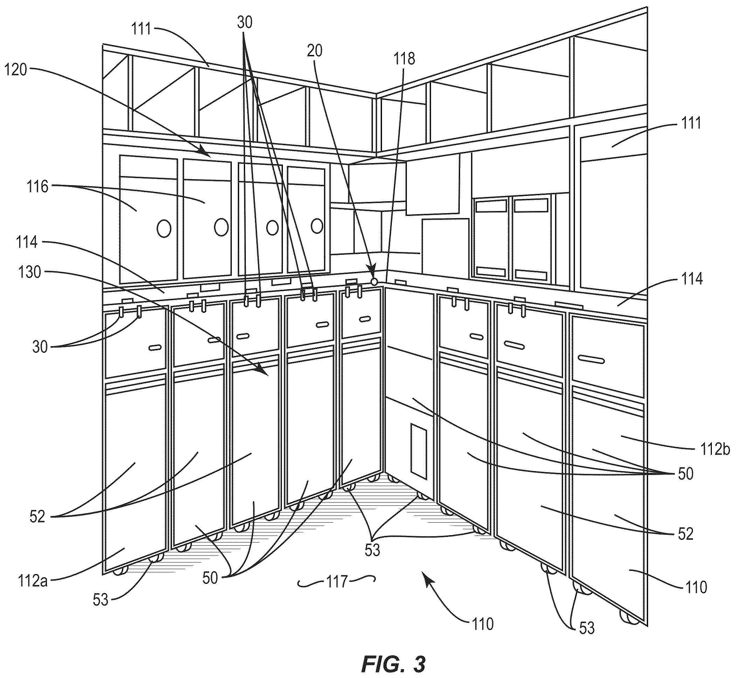

Figure 3 illustrates an attendant area 110 that includes monuments 111 forming a work station 120. The work station 120 includes equipment 116 such as an oven and refrigerator or freezer provides for preparing and storage of the food or drinks. A counter 114 is positioned near the equipment that provides a work surface for flight personnel when preparing the food and drinks. The counter 114 is positioned upward above a floor 117. The counter 114 conforms to the shape of the fuselage and includes a corner 118.

The space between the counter 114 and the floor 117 forms a storage area 130 for the service carts 50. The service carts 50 are shaped and sized to fit within the storage area 130 when aligned in a side-by-side configuration. The service carts 50 include doors 52 to access the interior where food and drinks are stored. Wheels 53 are mounted at the bottom sides.

Latches 30 are mounted to the work station 120 to secure the service carts 50 in the storage area. In some examples, the latches 30 are referred to as "quarter turns" because they turn approximately 90'between locked and unlocked positions. In some examples, the latches 30 are mounted to the front side of the counter 114. The latches are spaced apart along the storage area so one or more latches 30 are positioned to lock each of the service carts 50. The latches may be arms. The latches 30 are movable between locked and unlocked positions. In the locked position, the latches 30 extend into the storage area 130 and in front of the service carts 50 to lock the service carts 50. In the unlocked position, the latches 30 are away from the service carts 50 to enable removal from the storage area 130. A locking assembly 20 selectively positions the one or more latches 30 between the locked and unlocked positions to secure one or more service carts 50.

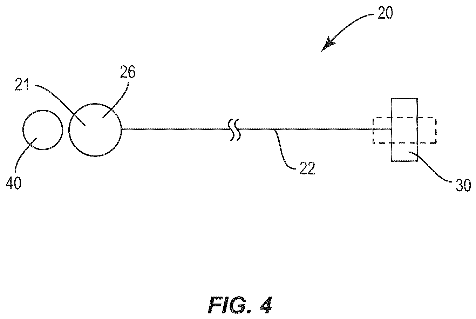

Figure 4 schematically illustrates a locking assembly 20 that generally includes an actuator 21 and a linkage 22. The actuator 21 includes a body 26 that forms or includes a handle that is configured to enable flight personnel to apply a force to control the locking and unlocking of the service cart 50. The linkage 22 has an elongated shape and extends between the actuator 21 and the latch 30. The actuator 21 is configured to be rotated or otherwise moved between different positions. A first position locates the latch 30 as illustrated in solid lines to secure the service cart. A second position locates the latch 30 as shown in dashed lines to be away from the service cart. This enables flight personnel to control the locking and unlocking of one or more of the service carts 50 in the storage position.

In some examples, the locking assembly 20 includes a visual indicator 40 that provides a visual status of whether the latch 30 is in the locked or unlocked position. The visual indicator 40 has a first visual appearance when the latch 30 is in the locked position and a different second visual appearance when the latch 30 is in the unlocked position. The visual indicator 40 can be a separate member as shown in Figure 4, or can be formed by the actuator 21 (i.e., the actuator 21 and the visual indicator 40 are the same member).

In some examples, the locking assembly 20 is mounted to the counter 114. This positions the actuator 21 and linkage 22 in proximity to the latches 30. This also provides for the actuator 21 to be located where it can be accessed by flight personnel. Further, this locates the visual indicator 40 at a position that can be easily viewed. In other examples, the locking assembly 20 is mounted to a frame or other structure on the monument 111.

Figure 4 illustrates a locking assembly 20 that controls the position of a single latch 30. Other examples include a locking assembly 20 that controls the position of multiple latches 30 that are used to lock/unlock multiple latches 30 that selectively secure one or more service carts 50. In some examples, the locking assembly 20 extends along a length of the counter 114 and controls the locking of multiple latches 30 that lock multiple service carts 50.

The locking assembly 20 can be used to lock and unlock service carts 50 that are stored at various positions in the attendant area 110. In the example of Figure 3, this includes any of the one or more service carts 50 that are aligned in the two rows 112a, 112b that extend underneath the substantially L-shaped counter 114. In some examples, the locking assembly 20 is configured to lock/unlock the one or more service carts 50 that are positioned in a corner 118 of the rows 112a, 112b. The service carts 50 in the corner 118 are blocked by one or more other service carts 50 making it difficult for flight personnel to access and position the latches 30. This positioning in the corner 118 also makes it difficult for the flight personnel to visually see and determine whether the latches 30 are locking the service carts 50.

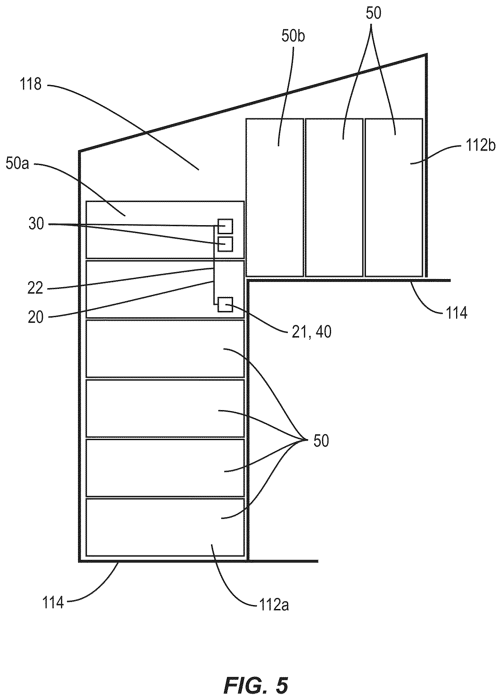

Figure 5 illustrates a locking assembly 20 positioned to control locking of a service cart 50a that is positioned in a corner 118 of the counter 114. Service cart 50a is aligned in row 112a of the counter 114 and is physically and visually blocked by service cart 50b that is aligned in row 112b. The locking assembly 20 is configured with the actuator 21 and visual indicator 40 spaced away from the corner 118 to be both physically accessible and visually accessible for flight personnel. The actuator 21 and visual indicator 40 are positioned outward and away from the service cart 50a that can be locked and/or unlocked.

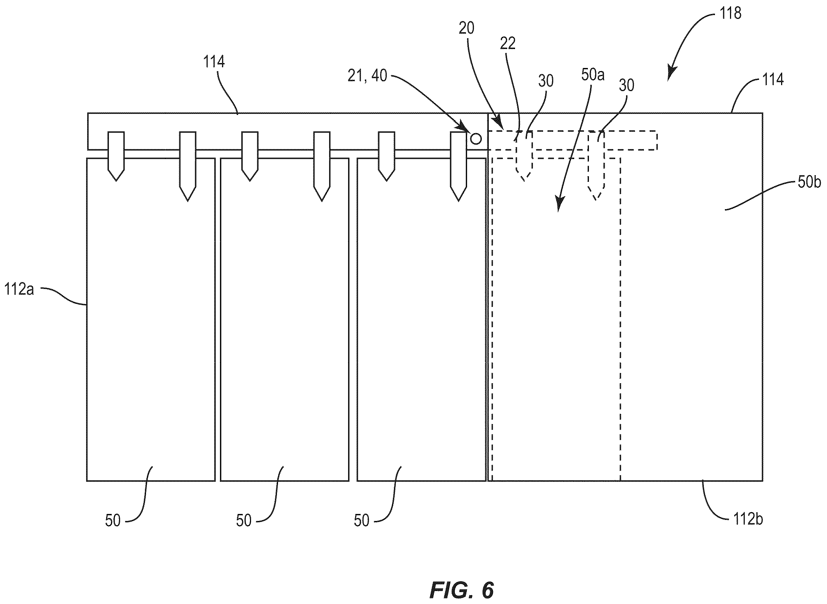

Figure 6 illustrates another view with service cart 50a blocked by service cart 50b. The locking assembly 20 extends at the counter 114 and engages the latches 30 that secure the service cart 50a. The linkage 22 has an elongated shape with the actuator 21 and visual indicator 40 positioned at a point away from the corner 118 to be both physically and visually accessible. This enables flight personnel to know the configuration of the latches 30 that control the service cart 50a and to selectively lock and unlock the latches 30. The latches 30 are configured to extend into the storage area 130 and secure the service carts 50. The latches 30 include a rigid body that can include various shapes and sizes. In some examples, each of the latches 30 is mounted on a shaft 31.

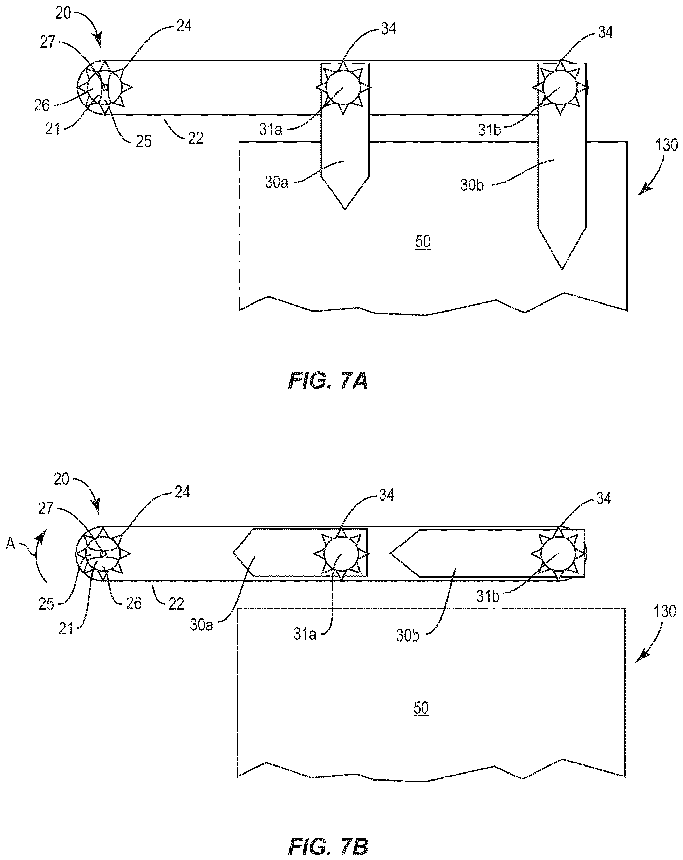

Figures 7A and 7B illustrate a locking assembly 20 to selectively move multiple latches 30a, 30b between a locked position as illustrated in Figure 7A and an unlocked position as illustrated in Figure 7B. In this example, the locking assembly 20 is connected to two latches, namely a first latch 30a, and a second latch 30b, to control the locking of a single service cart 50. Other examples include the locking assembly 20 engaged with a single latch 30, or with three or more latches 30 that control the locking of one or more service carts 50.

The actuator 21 is configured to be grasped and rotated by flight personnel to selectively position the latches 30a, 30b between the locked and unlocked positions. In some examples, the actuator 21 includes a body 26 that forms and/or includes a handle 25 configured to be grasped by the flight personnel. The body 26 is mounted on a shaft 27. Teeth 24 are mounted to one or both of the body 26 and shaft 27 to facilitate contact with the linkage 22 and prevent the linkage 22 from slipping during rotation of the actuator 21.

The linkage 22 has an elongated shape sized to extend between and connected to the actuator 21 and latches 30a, 30b. The linkage 22 functions to transfer a force that is applied to the actuator 21 to the latches 30a, 30b. In some examples as illustrated in Figures 7A and 7B, the linkage 22 is an elongated member formed in a continuous loop. In some examples, the linkage 22 is flexible to extend around the actuator 21 and/or latches 30. In other examples, the linkage 22 has a rigid construction. The linkage 22 can be constructed from a variety of material such as but not limited to wire, woven fibers, rubber, plastic, wire, and cable.

The linkage 22 is sized to enable the actuator 21 to be spaced away from the latches 30a, 30b. This enables the actuator 21 to be accessible. In some examples, the linkage 22 engages with teeth 34 that are mounted on the latches 30.

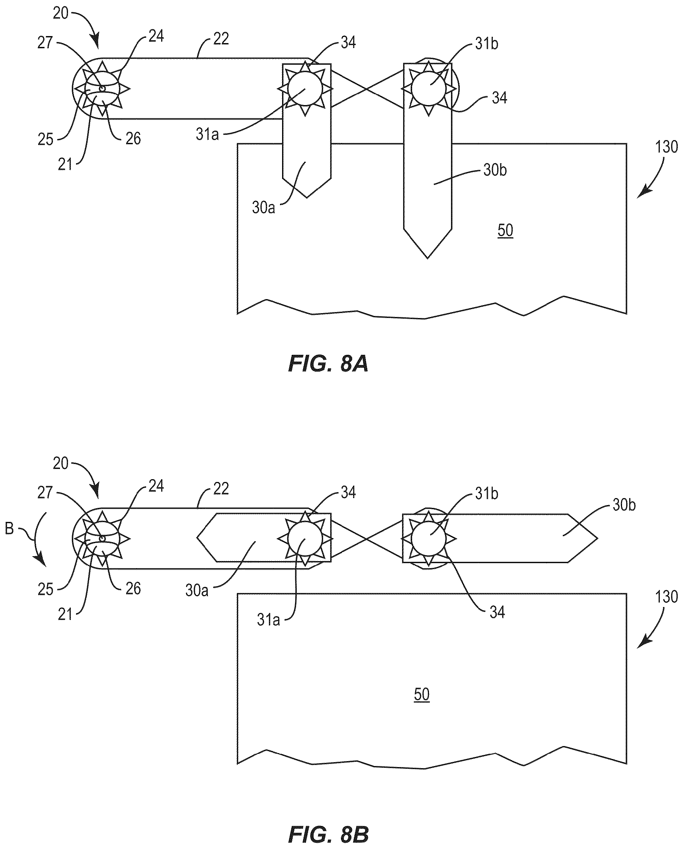

Figure 8A illustrates the locking assembly 20 in the locked position. This includes the latches 30a, 30b in rotational positions that extend in front of the service cart 50. The extension of the latches 30a, 30b in the locked position can physically block the service cart 50 of being released from the storage area 130. This secures the service cart 50 in the storage area 130. Figure 8B illustrates the locking assembly 20 in the unlocked position. The actuator 21 has been rotated in the direction of arrow B to move the linkage 22 and rotate the latches 30a, 30b. The latches 30a, 30b are now positioned away from the service cart 50 to enable the service cart 50 to be moved from the storage area 130. The linkage 22 is configured such that rotation of the actuator 21 moves the first latch 30a and the second latch 30b in the opposite rotational directions.

Figures 8A and 8B illustrate a locking assembly 20 in which the linkage 22 is overlapped between the latches 30a, 30b. This configuration provides for the latches 30a, 30b to rotate in opposing directions during rotation of the actuator 21 (such as rotation in the direction shown in arrow B).

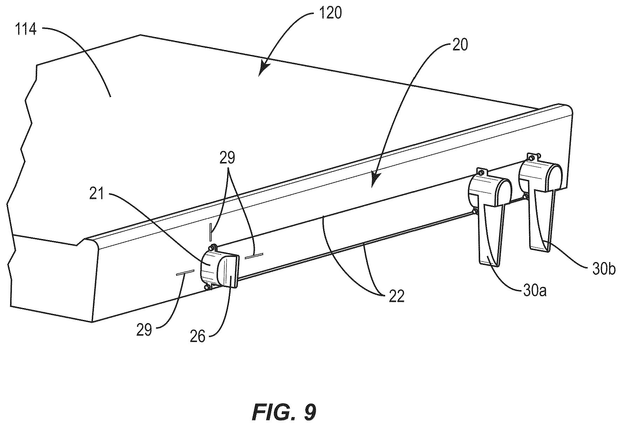

Figure 9 illustrates a locking assembly 20 with the linkage 22 formed by a pair of rigid members. The two rigid members connect on opposing sides to each of the actuator 21 and latches, namely a first latch 30a, and a second latch 30b. The rigid members are configured to transfer the rotational force applied to the actuator 21 to rotate the latches 30a, 30b. Rotation of the actuator 21 in a first direction rotates both latches 30a, 30b in the same first direction, and rotation of the actuator 21 in an opposing second direction rotates both latches 30a, 30b in the second direction.

In some examples as illustrated in Figure 9, the linkage 22 is exposed on the work station 120. Figure 9 includes the linkage 22 positioned at the front edge of the counter 114. In other examples, the linkage 22 is not exposed. This positioning can protect the linkage 22 and prevent inadvertent contact, such as when flight personnel are preparing drinks/food. In some examples, the linkage 22 is positioned within a sheath that is mounted to the work station 120. In other examples, the linkage 22 is recessed within the work station.

The visual indicator 40 provides a visual indication to flight personnel about the positioning of the latches 30. In the examples of Figures 7A, 7B, 8A, 8B, and 9 the locking assembly 20 does not include a separate visual indicator 40. The actuator 21 and the visual indicator 40 may share a common body. The actuator 21 and the visual indicator 40 may be formed as an integral component. In these examples, the actuator 21 and visual indicator 40 are the same member. The position of the body 26 of actuator 21 also functions as the visual indicator 40. In some examples, the actuator 21 includes indicia 29 such as an arrow, line, or other like marking to indicate the rotational position of the body 26 relative to the work station 120. In some examples, indicia 29 are also positioned on the work station 120 to show the relative rotational position.

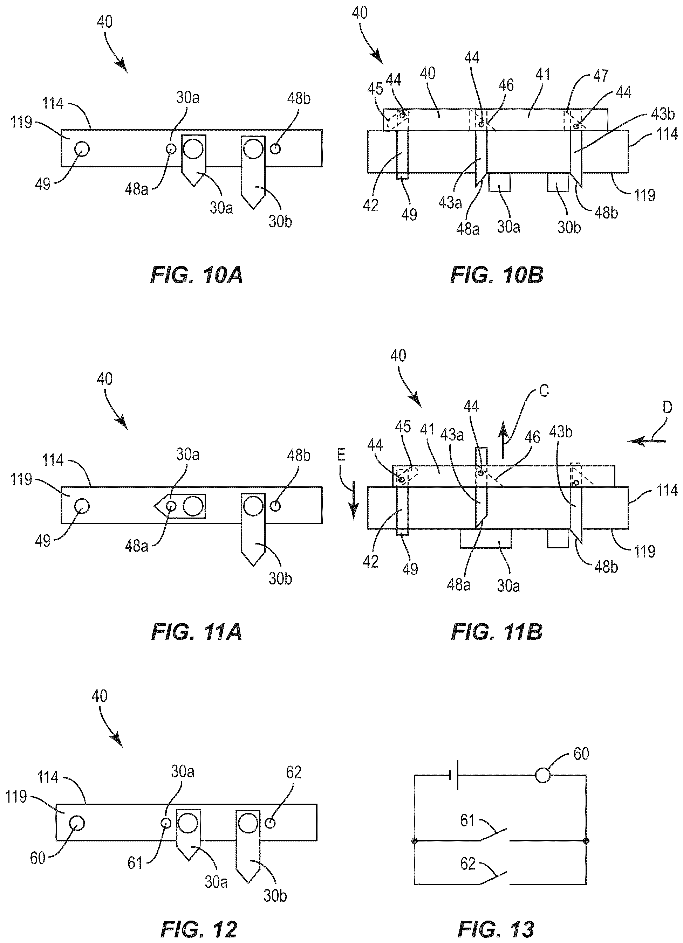

Figures 10A and 10B illustrate an example of a visual indicator 40. The visual indicator 40 includes a block 41 that is mounted at the work station, such as to an underside or backside of the counter 114. A tab 42 and fingers 43a, 43b, namely a first finger 43a and a second finger 43b, extend through the block 41. A first latch 30a and a second latch 30b are provided. The tab 42 includes an end 49. The fingers 43a, 43b include respectively tapered ends 48a, 48b. A pin 44 connected to the tab 42 is positioned within a slot 45 in the block 41. The first finger 43a is positioned at the first latch 30a and a pin 44 connected to the first finger 43a contacts against an angled surface 46 in the block 41. The second finger 43b is positioned at the second latch 30b and a pin 44 connected to the second finger 43b contacts against an angled surface 47 in the block 41. In the locked position as illustrated in Figures 10A and 10B, the fingers 43a, 43b extend outward from the front side 119 of the counter 114. The tab 42 is positioned with the end 49 either recessed within our flush with the front side 119 of the counter 114.

Figures 11A and 11B illustrates the visual indicator 40 when first latch 30a has been rotated to an unlocked position. The rotation causes the first latch 30a to contact against the tapered end 48a of finger 43a. The tapered shape causes the first finger 43a to be moved away from the front side 119 in the direction indicated by arrow C. The movement of the first finger 43a causes the pin 44 in the first finger 43a to slide along the ramped surface of the block 41. This causes the block 41 to slide relative to the counter 114 in the direction indicated by arrow D. The movement of the block 41 in turn causes the pin 44 in tab 42 to slide along the slot 45 which in turn causes the tab 42 to move outward in the block 41 in direction indicated by arrow E. The end 49 of the tab 42 extends outward beyond the front side 119 of the counter 114 providing a visual indication of the unlocked position of the first latch 30a.

Figures 11A and 11B show the movement of the first latch 30a and the resulting movement of the tab 42 to provide a visual indication. Movement of the second latch 30b provides a similar result due to the contact between the second latch 30b and the second finger 43b.

Figures 12 and 13 illustrate another visual indicator 40 that includes a light 60 that illuminates based on the position of the latches 30. Switches 61, 62, namely a first switch 61 and a second switch 62, are associated with each of the latches 30, namely a first switch 30a and a second latch 30b, and open and close based on their position. In some examples, a ferrous metal is positioned on each of the latches 30a, 30b and contacts are positioned on the front side 119 of the counter 114. The first switch 61 closes when the first latch 30a is moved to the unlocked position and the ferrous metal is positioned in proximity. Likewise, the second switch 62 closes when the second latch 30b is moved to the unlocked position. The light 60 is illuminated when either switch is closed. Figure 13 illustrates a corresponding circuit that illustrates the light 60 and two switches 61, 62. The ferrous metal in the latches 30a, 30b closes the respective magnetic switch which completes the circuit to power the light 60.

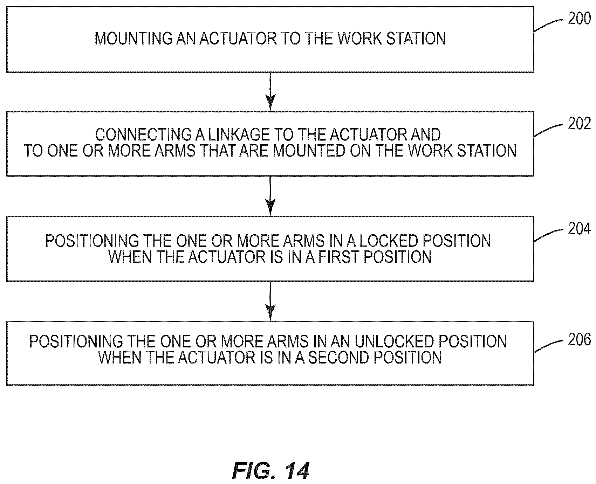

Figure 14 illustrates a method of mounting a locking assembly 20 to a work station 120 within a cabin area 103 of an aircraft 100. An actuator 21 is mounted to the work station 120 (block 200). The actuator 21 is configured to move between different positions relative to the work station 120. A linkage 22 is connected to the actuator 21 and to one or more latches 30 that are mounted on the work station 120 (block 202). The linkage 22 is configured to transfer force from the actuator 21 to the one or more latches 30. The linkage 22 positions the one or more arms in a locked position when the actuator 21 is in a first position with the one or more latches 30 extending in front of a service cart 50 that is positioned at the work station 120 (block 204). The linkage 22 positions the one or more latches 30 in an unlocked position when the actuator 21 is in a second position with the one or more latches 30 positioned away from the service cart 50 (block 206).

By the term "substantially" with reference to amounts or measurement values, it is meant that the recited characteristic, parameter, or value need not be achieved exactly. Rather, deviations or variations, including, for example, tolerances, measurement error, measurement accuracy limitations, and other factors known to those skilled in the art, may occur in amounts that do not preclude the effect that the characteristic was intended to provide.

Spatially relative terms such as "under", "below", "lower", "over", "upper", and the like, are used for ease of description to explain the positioning of one element relative to a second element. These terms are intended to encompass different orientations of the device in addition to different orientations than those depicted in the figures. Further, terms such as "first", "second", and the like, are also used to describe various elements, regions, sections, etc. and are also not intended to be limiting. Like terms refer to like elements throughout the description.

The present invention may, of course, be carried out in other ways than those specifically set forth herein. The present embodiments are to be considered in all respects as illustrative and not restrictive, and all changes coming within the meaning of the appended claims are intended to be embraced therein.

The following Clauses provide some example configurations of the locking assembly and the methods of mounting the locking assembly to a work station within a cabin area of an aircraft as disclosed herein.
Clause 1. A locking assembly to position one or more latches that are configured to be mounted to a work station to selectively lock a service cart at the work station in a cabin area of an aircraft, the locking assembly comprising:
   an actuator comprising a body configured to connect to and move relative to the work station;
   a visual indicator configured to mount to the work station, the visual indicator comprising a first visual appearance when the actuator is at a first position and a second visual appearance when the actuator is at the second position; and
   a linkage comprising an elongated shape with a first end section connected to the one or more latches and a second end section connected to the actuator, the linkage configured to transfer force from the rotating actuator to the one or more latches and sized to space the actuator away from the one or more latches.
Clause 2. The locking assembly of Clause 1, wherein the actuator is spaced away from the visual indicator.
Clause 3. The locking assembly of Clause 1 or 2, further comprises switches associated with each of the one or more latches, each of the switches configured to close to cause illumination of the visual indicator when a corresponding one of the latches is in an unlocked position.
Clause 4. The locking assembly according to any one of Clauses 1 to 3, wherein the visual indicator is a tab that is configured to move between recessed and extended positions relative to the work station.
Clause 5. The locking assembly according to any one of Clauses 1 to 4, further comprising teeth mounted on the actuator and the one or more latches, wherein the linkage is positioned on the teeth to prevent the linkage from slipping.
Clause 6. The locking assembly according to any one of Clauses 1 to 5, wherein the actuator further comprises:
   a shaft configured to mount to the work station and with a length to extend outward from the work station;
   teeth that extend radially outward from the shaft to engage with the linkage; and
   a handle connected to the shaft.
Clause 7. The locking assembly according to any one of Clauses 1 to 6, wherein the actuator and the visual indicator comprise a common body.
Clause 8. The locking assembly according to any one of Clauses 1 to 7, wherein the linkage comprises a flexible elongated member that forms a continuous loop with the loop extending around the actuator and the one or more latches.
Clause 9. The locking assembly according to any one of Clauses 1 to 7, wherein the linkage comprises a rigid member with a first end connected to the actuator and a second end connected to the one or more latches.
Clause 10. The locking assembly according to any one of Clauses 1 to 9, wherein the linkage is configured to cause the one or more latches to rotate in a common direction as the actuator.
Clause 11. A locking assembly to selectively position one or more latches between a locked position and an unlocked position, the locking assembly configured to be mounted to a work station in a cabin area of an aircraft to selectively lock a service cart, the locking assembly comprising:
   an actuator comprising a body with a handle and configured to be movable to different positions relative to the work station;
   a visual indicator configured to selectively have a first visual appearance and a different second visual appearance depending upon the position of the one or more latches;
   a linkage comprising an elongated shape that extends between and is connected to the actuator and the one or more latches;
   wherein the linkage is configured to transfer force from the actuator to the one or more latches to move the one or more latches between a locked position and an unlocked position;
   the locked position locates the one or more latches outward from the work station to lock the service cart; and
   the unlocked position locates the one or more latches away from the service cart to unlock the service cart.
Clause 12. The locking assembly of Clause 11, further comprising teeth positioned on the actuator with the linkage located on the actuator at the teeth to prevent slippage of the linkage.
Clause 13. The locking assembly of Clause 11 or 12, wherein the linkage comprises a loop that extends around shafts on the one or more latches and the actuator.
Clause 14. The locking assembly according to any one of Clauses 11 to 13, wherein the visual indicator and the linkage share a common body.
Clause 15. A method of mounting a locking assembly to a work station within a cabin area of an aircraft, the method comprising the steps of:
   mounting an actuator to the work station with the actuator configured to move between different positions relative to the work station;
   connecting a linkage to the actuator and to one or more latches that are mounted on the work station with the linkage configured to transfer force from the actuator to the one or more latches;
   wherein the linkage is configured to position the one or more latches in a locked position when the actuator is in a first position with the one or more latches extending in front of a service cart that is positioned at the work station to lock the position of the service cart; and
   wherein the linkage is configured to position the one or more latches in an unlocked position when the actuator is in a second position with the one or more latches positioned away from the service cart to enable the service cart to be moved away from the work station.
Clause 16. The method of Clause 15, further comprising positioning a visual indicator in proximity to the one or more latches with the visual indicator having a first visual appearance when the one or more latches are in the locked position and a second visual appearance when the one or more latches are in the unlocked position.
Clause 17. The method of Clause 15 or 16, wherein connecting the linkage to the actuator and the one or more latches comprises wrapping a continuous loop of the linkage around each of the actuator and the one or more latches.
Clause 18. The method according to any one of Clauses 15 to 17, further comprising positioning the actuator on a front side of the work station and positioning the linkage behind the front side to prevent the linkage from inadvertent contact with flight personnel.
Clause 19. The method according to any one of Clauses 15 to 18, further comprising closing a switch on an electrical circuit when the one or more latches moves from the locked position to the unlocked position and illuminating a visual indicator.
Clause 20. The method according to any one of Clauses 15 to 19, further comprising moving the one or more latches to the locked position and extending the one or more latches below a counter of the work station.

## Claims

1. A locking assembly to position one or more latches (30) that are configured to be mounted to a work station (120) to selectively lock a service cart (50) at the work station (120) in a cabin area (103) of an aircraft (100), the locking assembly comprising:
an actuator (21) comprising a body configured to connect to and move relative to the work station (120);
a visual indicator (40) mounted to the work station (120), the visual indicator (40) comprising a first visual appearance when the actuator (21) is at a first position and a second visual appearance when the actuator (21) is at the second position; and
a linkage (22) comprising an elongated shape with a first end section connected to the one or more latches (30) and a second end section connected to the actuator (21),
wherein the linkage (22) is configured to transfer force from the rotating actuator (21) to the one or more latches (30) and sized to space the actuator (21) away from the one or more latches (30).

2. The locking assembly of claim 1, wherein the actuator (21) is spaced away from the visual indicator (40).

3. The locking assembly of claim 1 or 2, further comprising switches (61, 62) associated with each of the one or more latches (30), wherein each of the switches (61, 62) is configured to close to cause illumination of the visual indicator (40) when a corresponding one of the latches (30) is in an unlocked position.

4. The locking assembly according to any one of claims 1 to 3, wherein the visual indicator (40) is a tab (42) that is configured to move between recessed and extended positions relative to the work station (120).

5. The locking assembly according to any one of claims 1 to 4, further comprising teeth (24, 34) mounted on the actuator (21) and the one or more latches (30), wherein the linkage (22) is positioned on the teeth (24, 34) to prevent the linkage (22) from slipping.

6. The locking assembly according to any one of claims 1 to 5, wherein the actuator (21) further comprises:
a shaft mounted to the work station (120) and with a length to extend outward from the work station (120);
teeth (24) that extend radially outward from the shaft to engage with the linkage (22); and
a handle (25) connected to the shaft.

7. The locking assembly of claim 1, wherein the actuator (21) and the visual indicator (40) share a common body.

8. The locking assembly according to any one of claims 1 to 7, wherein the linkage (22) comprises a flexible elongated member that forms a continuous loop with the loop extending around the actuator (21) and the one or more latches (30).

9. The locking assembly according to any one of claims 1 to 7, wherein the linkage (22) comprises a rigid member with a first end connected to the actuator (21) and a second end connected to the one or more latches (30), and/or
wherein the linkage (22) is configured to cause the one or more latches (30) to rotate in a common direction as the actuator (21).

10. A method of mounting a locking assembly to a work station (120) within a cabin area (103) of an aircraft (100), the method comprising the steps of:
mounting an actuator (21) to the work station (120) with the actuator (21) configured to move between different positions relative to the work station (120);
connecting a linkage (22) to the actuator (21) and to one or more latches (30) that are mounted on the work station (120) with the linkage (22) configured to transfer force from the actuator (21) to the one or more latches (30);
wherein the linkage (22) is configured to position the one or more latches (30) in a locked position when the actuator (21) is in a first position with the one or more latches (30) extending in front of a service cart (50) that is positioned at the work station (120) to lock the position of the service cart (50); and
wherein the linkage (22) is configured to position the one or more latches (30) in an unlocked position when the actuator (21) is in a second position with the one or more latches (30) positioned away from the service cart (50) to enable the service cart (50) to be moved away from the work station (120).

11. The method of claim 10, further comprising the step of positioning a visual indicator (40) in proximity to the one or more latches (30) with the visual indicator (40) having a first visual appearance when the one or more latches (30) are in the locked position and a second visual appearance when the one or more latches (30) are in the unlocked position.

12. The method of claim 10 or 11, wherein the step of connecting the linkage (22) to the actuator (21) and the one or more latches (30) comprises wrapping a continuous loop of the linkage (22) around each of the actuator (21) and the one or more latches (30).

13. The method according to any one of claims 10 to 12, further comprising the steps of positioning the actuator (21) on a front side of the work station (120) and positioning the linkage (22) behind the front side to prevent the linkage (22) from inadvertent contact with flight personnel.

14. The method according to any one of claims 10 to 13, further comprising the steps of closing a switch on an electrical circuit when the one or more latches (30) moves from the locked position to the unlocked position and illuminating a visual indicator (40).

15. The method according to any one of claims 10 to 14, further comprising the steps of moving the one or more latches (30) to the locked position and extending the one or more latches (30) below a counter of the work station (120).
